# EUROPEAN PATENT APPLICATION

(11) **EP 3 392 843 A1**
(43) Date of publication of application: **24.10.2018**
(21) Application number: 17465514.2
(22) Date of filing: 20.04.2017
(51) Int. Cl.: G07C 9/00, H04W 4/00

(54) **START AND ACCESS SYSTEM AND RELATED METHOD**

(71) Applicant: Continental Automotive GmbH, 30165 Hannover (DE)
(72) Inventor: Eppel, Horatiu Cristian, 320117 Resita (RO); Saracin, Cristian, 300446 Timisoara (RO); Burlacu, Bogdan Alexandru, 300756 Timisoara (RO)

(57) **Abstract**

A start and access system comprises a transponder unit (2), arranged in a portable device. The transponder unit (2) is configured to, in a polling mode, generate an electromagnetic field, detect a control unit (3) arranged in an object if the control unit (3) is located within the electromagnetic field generated by the transponder unit (2), read information from the control unit (3), determine whether the information is correct, and initiate a start and unlocking process if the information is determined as being correct.

## Description

The current invention relates to a start and access system and a related method, in particular a start and access system for a vehicle.

Most vehicles today may be unlocked and started using an electronic key. Some start and access systems are known in which the user needs to press an unlocking button on the key to unlock the vehicle. In order to start the vehicle, the key usually has to be inserted into an arrangement which replaces the ignition switch, as is known from older vehicles. Other start and access systems are known in which the vehicle may be unlocked and started without the user having to press a button or having to insert the key in any arrangement. Such start and access systems are often called keyless start and entry systems. With keyless start and entry systems, the vehicle may be unlocked automatically when the key is detected within a certain distance from the vehicle. In order to start the vehicle, a start button within the vehicle usually has to be pressed.

Keyless start and entry systems may use near field communication (NFC). A control unit arranged within the vehicle changes to a polling mode regularly or when a triggering event occurs. In the polling mode, the control unit searches for other NFC devices. If another NFC device is detected within the range of the control unit, the control unit sends out inquiry signals. If the other NFC device is a transponder unit (vehicle key), it receives the inquiry signals and sends a response signal to the control unit to identify itself. If the response signal is correct and the transponder unit is identified as the transponder unit belonging to the vehicle, the vehicle is unlocked and/or started.

The problem to be solved by the current invention is to provide an alternative start and access system and method which are more reliable than current solutions.

This problem is solved by an access system according to claim 1 and a method according to claim 10. Configurations and further developments of the invention are the subject of the dependent claims.

A start and access system includes a transponder unit, arranged in a portable device. The transponder unit is configured to generate an electromagnetic field in a polling mode, detect a control unit arranged in an object if the control unit is located within the electromagnetic field generated by the transponder unit, read information from the control unit, determine whether the information is correct, and initiate a start and unlocking process if the information is determined as being correct.

As the transponder unit is the initiator and the control unit is the target, the system may be used irrespective of whether the card emulation interface of the portable device is disabled or not.

Initiating a start and unlocking process may include opening a vehicle control application installed on the portable device, wherein the vehicle control application may be configured to perform an authentication of the control unit and to instruct the unlocking or starting of the object if the control unit has been authenticated.

A vehicle control application may be easily installed on a portable device and may perform the start and unlocking process.

Performing an authentication of the control unit may include sending an authentication command signal to the control unit, and receiving an authentication response message from the control unit.

This is a simple way of authenticating the control unit and of determining that the transponder unit is authorized to start and/or open the object.

The transponder unit may be configured to generate the electromagnetic field at a frequency of 13.56MHz.

A frequency of 13.56MHz is usually used for near field communication.

Accordingly, the transponder unit may be configured to communicate according to a valid near field communication standard.

Most portable devices such as smartphones, tablets or laptops are able to communicate according to a valid near field communication (NFC) standard. NFC is used for many different applications. No additional hardware, therefore, has to be provided. The hardware already present in portable devices may be used for the start and access system.

An exchange of data or information between the transponder unit and the control unit may occur via inductive coupling between the transponder unit and the control unit.

The transponder unit may be configured to change from a standby mode, in which no electromagnetic field is generated, to the polling mode when a triggering event is detected.

Reading information from the control unit may include identifying the control unit, and reading a NFC Data Exchange Format (NDEF) message from the control unit.

Identifying the control unit may comprise identifying the control unit as a Type-4 tag device. There are generally four types of NFC tags defined by the NFC Forum. The type-4 tag complies with both A and B versions of ISO/IEC 14443 standard.

A method includes switching a transponder unit that is arranged in a portable device to a polling mode, in the polling mode, generating an electromagnetic field, detecting a control unit arranged in an object if the control unit is located within the electromagnetic field generated by the transponder unit, reading information from the control unit, determining whether the information is correct, and initiating a start and unlocking process if the information is determined as being correct.

Examples are now explained with reference to the drawings. In the drawings the same reference characters denote like features.
Figure 1 illustrates the general principle of a keyless start and entry system.
Figure 2 exemplarily illustrates in a block diagram a start and access system according to the present invention.
Figure 3 exemplarily illustrates in a block diagram a further start and access system according to the present invention.
Figure 4 exemplarily illustrates in a flow diagram a method according to the present invention.
Figure 5 exemplarily illustrates a further method according to the present invention.

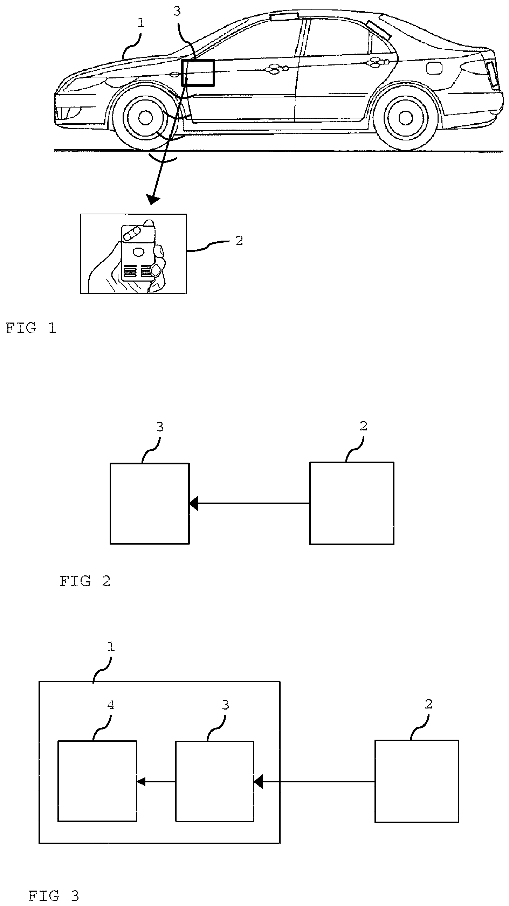

Figure 1 illustrates a vehicle 1 with a keyless start and entry system. The start and entry system comprises a control unit 3. The control unit 3 may be arranged anywhere within or on the vehicle 1. The control unit 3 is configured to trigger an unlocking or engine start process if an electronic key belonging to the vehicle 1 is detected near or inside the vehicle 1. The control unit 3 sends out inquiry signals. Such inquiry signals are usually low frequency (about 20kHz to 200kHz) signals. The inquiry signals are coded with a first coding chart. The inquiry signals may be received by a transponder unit 2 if the transponder unit 2 is within the range of the signals. The transponder unit 2 decodes, analyses and/or further processes the inquiry signals. After further processing the inquiry signals, the transponder unit 2 sends response signals back to the control unit 3. The response signals are coded with a second coding chart. The response signals may be generated by means of load modulation, for example, and may be decoded within the vehicle 1.

The vehicle 1 knows both coding charts and may compare the original inquiry signals with the received response signals. If the response signals are identified as being correct, the vehicle 1 may be unlocked. If a start button is pressed and the response signals are identified as being correct, the vehicle 1 may be started. If, after sending the inquiry signals, no response signals or incorrect response signals are received within a certain time, nothing happens and the vehicle 1 remains locked and/or turned off.

The transponder unit 2 may be arranged within a vehicle key or a portable device such as a mobile phone, for example, which the user of the vehicle 1 carries with him.

The control unit 3 may send out inquiry signals in regular intervals or in response to a certain trigger event. Such a trigger event may be the user touching the door handle or pressing a start button, for example.

Near field communication (NFC) may be used for start and entry systems for any kind of vehicle (passenger cars, trucks, busses, trains, etc.) as well as for buildings (e.g., private houses, office facilities or public buildings). NFC is a technology that is used to provide short-range wireless connectivity for a two-way interaction between electronic devices. NFC is promoted and maintained by the NFC Forum, a non-profit industry association created with the goal of advancing the use of NFC technology in consumer electronics, mobile devices and PCs. The NFC Forum promotes implementation and standardization of the NFC technology to ensure interoperability between devices and services. NFC is a flavor of RFID (radio-frequency identification), with an additional, specific set of standards ensuring interoperability of NFC-enabled equipment. NFC standards determine, among other things, the operating environment, the data formats, the transfer rates, and the modulation.

NFC uses inductive coupling between NFC devices, and operates with electromagnetic fields at 13.56MHz, which is a license-free allocation in the HF portion of the radio spectrum. An NFC device can draw power from the field generated by another NFC device, thus making it exempt of power supply, and allows the NFC device to take the form of tiny objects such as tags, stickers, key remote controls or cards.

Near-field communication defines two types of NFC devices. These are known as initiator and target. The initiator is the device that initiates the communication. It also controls the data exchanges. The target device is the one that responds to the request from the initiator.

In known start and entry systems, the control unit 3 within the vehicle 1 is the initiator. The control unit 3 searches for other NFC devices within the proximity of the control unit 3, in particular in the proximity of the antenna in the control unit 3 which generates the electromagnetic field. If another NFC device is detected, the control unit 3 may send out inquiry signals, as has been described above. The detecting of another NFC device, therefore, may be the triggering event which triggers the communication between the devices and the authentication of the transponder unit 2. The transponder unit 2 generally is the target.

In many start and entry systems today, a portable device such as the smart phone of a user, for example, may act as the vehicle key. In such cases, it is no longer necessary for the user to carry a separate vehicle key. Most people today possess smart phones which they carry with them most of the time. By making the smart phone act as a vehicle key, it is no longer necessary to carry a dedicated vehicle key in addition to the smart phone. However, in order to be able to communicate with the control unit 3, the smart phone has to be in the so-called card emulation mode. In this mode, an NFC device behaves as a standard contactless smart card. This emulation mode makes it generally possible to use the portable device in connection with existing smart card infrastructure for many different applications such as access control, contactless payments, firmware exchange or data transfer. However, as it may be used for contactless payment as well, which is a security sensitive application, many smart phone manufacturers disable the card emulation mode. If the card emulation mode is disabled, the smart phone may no longer function as the target in a start and entry system.

The current invention, therefore, proposes a different solution. According to the present invention, the transponder unit 2 (e.g., portable device such as a smart phone) acts as the initiator and the control unit 3 within the vehicle 1 acts as the target. This is schematically illustrated in Figure 2 by means of the arrow which indicates the direction of the communication. The communication is initiated by the transponder unit 2. Any RFID reader or smart phone may usually act as an NFC initiator. The transponder unit 2 may change into the polling mode in regular intervals or when a triggering event is detected. If the transponder unit 2 is a mobile phone or smartphone, it might not be possible to change to the polling mode while the display is turned off. Therefore, changing to the polling mode in regular intervals might not be possible in such cases. In response to a triggering event, the display may be turned on and the mobile phone may then change to the polling mode, for example. As has been explained before, the initiator, in proximity of another NFC devices, initiates a communication, then collects information from the other NFC device and subsequently runs an action according to that information. The identification of an NFC tag is one example of collecting information.

NFC recognizes two modes of operation, passive mode and active mode, and three modes of communication, read/write mode, card emulation mode (as has been described before) and peer-to-peer mode. In the passive mode of operation, only one NFC device generates an NFC field. In that sense, it is active and always plays the role of the NFC initiator. The passive mode may also be called polling mode. The initiating device may regularly change to a polling mode. In the polling mode the device generates an electromagnetic field and searches for other NFC devices. In the passive mode, the second device is always passive and plays the role of the NFC target. The active device (initiator) transfers data by modulating the carrier of the field it generates. The modulation is detected by the passive device and interpreted as data. The passive device transfers data to the active device by load-modulating the intensity of the field. The active device detects the variation of the field and interprets it as data.

The operating distances and data rates generally depend upon the size of the antenna of the initiator and the field modulation magnitude. In either direction, the data to be transferred between the devices is encoded with methods defined in ISO/IEC RFID and in the NFC-specific standard. The passive mode is typically used for reading contactless tags or smart cards.

In the active mode of operation, both NFC devices generate RF electromagnetic fields. Each side may transmit data using the ASK (amplitude shift keying) modulation scheme. Other modulation schemes are possible, depending on the NFC technology. As compared to the passive mode, larger operating distances up to 1m (depending on the protocol) are possible. High data transfer rates called VHBR (very high bit rate) of up to 6.78 Mbit/s are reached when using the PSK (phase shift keying) modulation type. In the active mode, the NFC target generates an active load modulation to answer the initiator request. The radio transmissions are half-duplex as the same radio channel is used for both transmission and reception.

An NFC device communicating in read/write mode reads data from or writes data to an NFC object. It may then act depending on the information read from the object. For example, an NFC phone in proximity of an NFC tag is able to retrieve an URL and go to the corresponding website. This mode usually uses the NFC Forum-defined message format. Data transfer in this mode is not secure. In the peer-to-peer (P2P) mode, the NFC-enabled devices operate in the active mode. One of the devices initiates a communication link. Once the link is established, the devices talk to one another alternately, applying listen-before-talk rules. The data exchange in this mode of communication is faster as compared to the other communication modes, so a bigger amount of data may be exchanged.

In the embodiment that is illustrated in Figure 2, as has been described above, the transponder unit 2 (within the portable device) acts as the initiator and the control unit 3 (within the vehicle 1) acts as the target. The control unit 3 initially is in the card emulation mode, meaning that the start and access system is in the passive mode and only the transponder unit 2 is actually active (e.g., regularly changes from a standby-mode to a polling mode) and reads information from the control unit 3 when the control unit 3 has been detected. If the information is recognized as being correct, the transponder unit 2 may change to an active mode and start the unlocking and/or start process. In the active mode, several further functions of the transponder unit 2 may be activated.

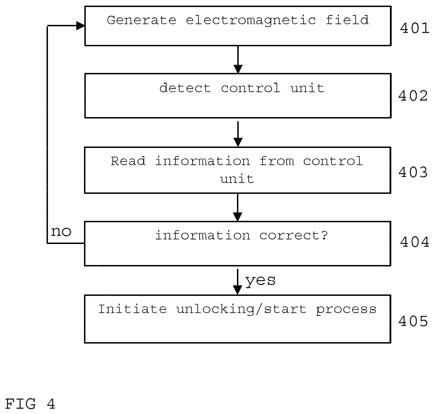

Figure 4 exemplarily illustrates a method according to the present invention. First, the transponder unit 2 may change to a polling mode and generate an electromagnetic field (step 401). While the electromagnetic field is being generated, another NFC device such as a control unit 3 may be detected (step 402). The control unit 3 may be arranged in an object such as a vehicle, for example. When the control unit has been detected, the transponder unit 2 may read information from the control unit (step 403). Information may be read from the control unit 3 in order to identify the control unit 3, for example. If the information is detected to be correct (step 404), the method may proceed further and an unlocking/start process may be initiated by the transponder unit 2 (step 405). An unlocking/start process may be initiated, e.g., by sending out inquiry signals, as has been described above. If the information however is detected to be incorrect in step 404, the method may return to step 401, where an electromagnetic field is generated to search for other devices.

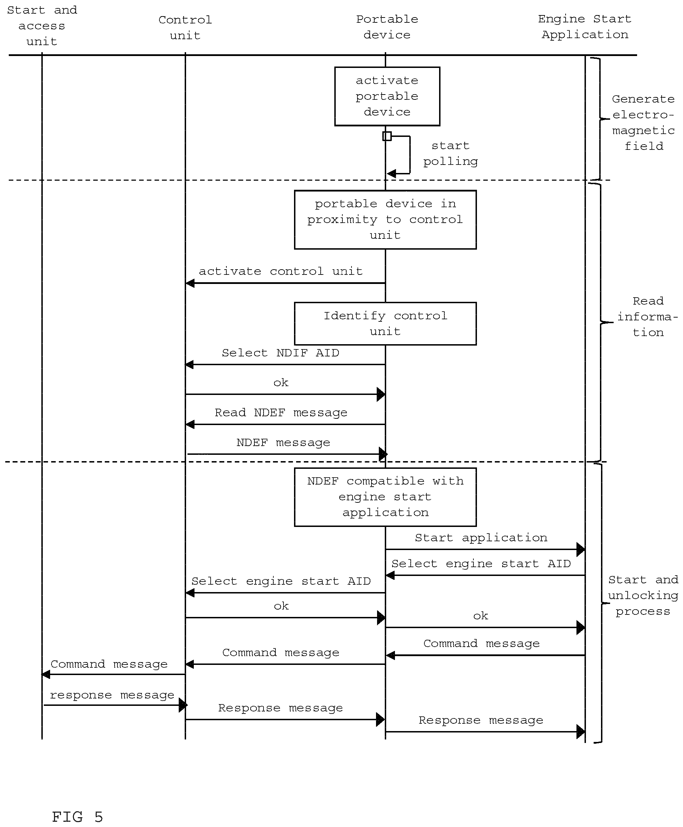

A further method according to the present invention will be exemplarily described in the following with reference to Figure 5. The method of Figure 5 also comprises the steps of generating an electromagnetic field, reading information and initiating a start and unlocking process, as has been described above with respect to Figure 4. The method of Figure 5 starts with an activation of the transponder unit 2 in the portable electronic device. When the transponder unit 2 is activated, it changes to a polling mode and searches for other NFC devices. If the transponder unit 2 (the portable electronic device) is in proximity to a control unit 3 (NFC device), the transponder unit 2 detects the control unit 3 and knows that another NFC device is within the range of the electromagnetic field. It then activates the control unit 3.

Next, the transponder unit 2 reads information from the control unit 3. However, before actually reading information from the control unit 3, the control unit 3 may be identified, e.g., as a Type-4 tag device. This step of identifying the control unit 3 will be further described in the following.

Generally, information may be read from the control unit 3 if the control unit 3 communicates according to the same NFC standard as the transponder unit 2. There are four types of NFC tags as defined by the NFC Forum. An additional fifth type is related with NFC-V technology, and is now included in the Forum specifications. According to the current invention, the transponder unit 2 may identify the control unit 3 as a Type-4 tag device, for example. The Type-4 tag complies with both versions of the ISO/IEC 14443 standard, namely A and B version. The Type-4 tag is usually factory-set to read-only mode and specific service equipment is required for updating its data. The Type-4 tag contains up to 32 kbytes of memory, supports 106 kbit/s, 212 kbit/s and 424 kbit/s data rates, as well as the so-called anti-collision mechanism.

If the control unit 3 has been identified, the transponder unit 2 may actually start to read information from the control unit 3. This step of reading information will be further described in the following.

Like many other systems, NFC technology is built over a structured logical stack of functional layers, transiting from physical to software implementation. The lowest layers are physical, e.g., CPU (central processing unit) or MCU (microcontroller unit), interfaces and radio-related circuitry as defined in ISO/IEC 14443-2 A and B and ISO/IEC 15693-2. Middle layers include data packeting according to ISO/IEC 14443-3 A and B and ISO/IEC 15693-2 and generation of commands according to NFC-A, NFC-B, NFC-V and NFC-F. Until this point there is no NFC-related specificity and the system up to this point corresponds to an RFID system. The first specificity related to NFC comes in form of middle layers dedicated to supporting the P2P communication mode. These are the logical link control protocol (LLCP), and simple NDEP exchange protocol (SNEP), as defined in ISO/IEC 18092.

The next higher layers of the stack, the NFC Data Exchange Format (NDEF) messages and NDEF records, are also NFC specific. They are usually implemented in software and accessed to via a user interface, which is the highest layer of the NFC logical functional stack. The NFC data exchange format (NDEF) is one of the major items that NFC standards add to the generic RFID. NDEF is used across all NFC devices, regardless the underlying tag type or NFC device technology. NDEF records are standardized, hence NFC devices know how to interpret them. Some of the NDEF records are simple text record, URI (uniform resource identifier), smart poster, signature, vCard (a standard electronic business card format) and pairing Bluetooth or WiFi, for example. NDEF is a light-weight binary message format designed to encapsulate application-defined payload bearing one or more NDEF records into a single message. NDEF records can be of the same or of a different type and the size of each of them is limited to (2³² - 1) bytes. A NDEF message is a concatenation of NDEF records that can be seen as a paragraph bearing a discrete chunk of information, and NDEF records as sentences in that paragraph, each conveying a single piece of information. Both the number and the size of the sentences in the paragraph are variable. An NDEF record is made up of a header and payload. The header describes the payload with three metadata items, namely payload length, payload type and, optionally, payload identifier.

The transponder unit 2 may select an NDEF application identifier (AID) and subsequently read the NDEF message from the control unit 3. The NDEF message includes information that is necessary for determining whether the control unit 3 is compatible with the transponder unit 2 and the portable device.

If the information transmitted via the NDEF message is determined to be correct and the NDEF type of the control unit 3 is detected to be compatible to the transponder unit 2, a connection between the transponder unit 2 and the control unit 3 may be established and a start and unlocking process may be initiated.

In one example, the start and unlocking process includes opening an application that is installed on the portable device, e.g., on the smartphone, tablet or laptop. The application may be a vehicle control application. This vehicle control application may perform the start and unlocking process.

The vehicle control application may be based on a routing table between the NDEF type and the corresponding application. The vehicle control application, when opened, may select an engine start application identifier (AID), for example, and transmit the engine start AID to the control unit 3. If the engine start AID is successfully selected and verified by the control unit 3, the portable device is identified as a valid vehicle key. Subsequently, the engine start application may cause the transponder unit 2 to send an authentication command message to the control unit 3. The control unit 3 receives the authentication command message and forwards it to a start and access unit. An embodiment including a start and access unit 4 is exemplarily illustrated in Figure 3. The start and access unit 4 returns an authentication response message to the transponder unit 2 via the control unit 3. The engine start application is thereby informed that the vehicle 1 has been started. The described procedure may be the same for unlocking the vehicle.

The start and access unit 4 is arranged in the vehicle 1 and is configured to unlock and/or start the vehicle. The start and access unit 4 is coupled to the control unit 3. The control unit 3 may take part in the authentication process associated with the start and unlocking process. When the authentication was successful, the control unit 3 may output start signals to the start and access unit 4. When the start and access unit 4 receives such start signals, it starts the vehicle 1. The same applies for unlocking the vehicle 1. The control unit 3, therefore, acts as a gateway between the transponder unit 2 and the start and access unit 4.

The start and access system is not restricted to the use in vehicles or, in particular, passenger cars. The access system may be used in any kind of vehicle such as busses or trucks, for example, as well as in buildings or garages, for example.

The components that are exemplarily illustrated in Figures 2 and 3 may not only be arranged in passenger cars. They may alternatively be arranged in any other kind of vehicle such as trucks or busses, for example, as well as in buildings or garages. Generally speaking, the control unit 3 may be arranged within any object that is desired to be unlocked or started using an electronic key.

## Claims

1. A start and access system comprising a transponder unit (2), arranged in a portable device, wherein the transponder unit (2) is configured to,
in a polling mode, generate an electromagnetic field;
detect a control unit (3) arranged in an object if the control unit (3) is located within the electromagnetic field generated by the transponder unit (2);
read information from the control unit (3);
determine whether the information is correct; and
initiate a start and unlocking process if the information is determined to be correct.

2. The system of claim 1, wherein initiating a start and unlocking process comprises
opening a vehicle control application installed on the portable device, wherein
the vehicle control application is configured to perform an authentication of the control unit (3) and to instruct the unlocking or starting of the object if the control unit (3) has been authenticated.

3. The system of claim 2, wherein performing an authentication of the control unit (3) comprises
sending an authentication command signal to the control unit (3); and
receiving an authentication response message from the control unit (3).

4. The system of any of claims 1 to 3, wherein the transponder unit (2) is configured to generate the electromagnetic field at a frequency of 13.56MHz.

5. The system of any of claims 1 to 4, wherein the transponder unit (2) is configured to communicate according to a valid near field communication standard.

6. The system of any of claims 1 to 5, wherein an exchange of data or information between the transponder unit (2) and the control unit (3) occurs via inductive coupling between the transponder unit (2) and the control unit (3).

7. The system of any of the preceding claims, wherein the transponder unit (2) is configured to change from a standby mode, in which no electromagnetic field is generated, into the polling mode when a triggering event is detected.

8. The system of any of claims 1 to 7, wherein reading information from the control unit (3) comprises
identifying the control unit (3); and
reading a NFC Data Exchange Format (NDEF) message from the control unit (3).

9. The system of claim 8, wherein identifying the control unit (3) comprises identifying the control unit (3) as a Type-4 tag device.

10. A method comprising
switching a transponder unit (2) that is arranged in a portable device in a polling mode;
in the polling mode, generating an electromagnetic field;
detecting a control unit (3) arranged in an object if the control unit (3) is located within the electromagnetic field generated by the transponder unit (2);
reading information from the control unit (3);
determining whether the information is correct; and
initiating a start and unlocking process if the information is determined as being correct.

## Amended claims

### Amended claims in accordance with Rule 137(2) EPC.

1. A start and access system comprising a portable device with a transponder unit (2), wherein the transponder unit (2) is configured to,
in a polling mode, generate an electromagnetic field;
detect a control unit (3) arranged in an object if the control unit (3) is located within the electromagnetic field generated by the transponder unit (2);
read information from the control unit (3);
determine whether the information is correct, wherein the control unit (3) is determined as being compatible with the transponder unit (2) if the information is correct; and
initiate a start or an unlocking process if the control unit (3) is determined to be compatible with the transponder unit (2), wherein
initiating a start or an unlocking process comprises opening a vehicle control application installed on the portable device,
the vehicle control application, when opened, is configured to transmit an application identifier to the control unit (3), and
the transponder unit (2) is further configured to, if the application identifier is verified by the control unit (3), send an authentication command message to the control unit (3) to instruct the unlocking or starting of the object.

2. The system of claim 1, wherein the transponder unit (2) is configured to generate the electromagnetic field at a frequency of 13.56MHz.

3. The system of claim 1 or 2, wherein the transponder unit (2) is configured to communicate according to a valid near field communication standard.

4. The system of any of claims 1 to 3, wherein an exchange of data or information between the transponder unit (2) and the control unit (3) occurs via inductive coupling between the transponder unit (2) and the control unit (3).

5. The system of any of the preceding claims, wherein the transponder unit (2) is configured to change from a standby mode, in which no electromagnetic field is generated, into the polling mode when a triggering event is detected.

6. The system of claim 3, wherein reading information from the control unit (3) comprises
identifying the control unit (3); and
reading a NFC Data Exchange Format (NDEF) message from the control unit (3).

7. The system of claim 6, wherein identifying the control unit (3) comprises identifying the control unit (3) as a Type-4 tag device.

8. A method comprising
switching a transponder unit (2) that is arranged in a portable device in a polling mode;
in the polling mode, generating an electromagnetic field;
detecting a control unit (3) arranged in an object if the control unit (3) is located within the electromagnetic field generated by the transponder unit (2);
reading information from the control unit (3);
determining whether the information is correct, wherein the control unit (3) is determined as being compatible with the transponder unit (2) if the information is correct;
initiating a start or an unlocking process if the control unit (3) is determined to be compatible with the transponder unit (2), wherein initiating a start or an unlocking process comprises opening a vehicle control application installed on the portable device,
transmitting an application identifier to the control unit (3) when the vehicle control application is opened, and
sending an authentication command message from the transponder unit (2) to the control unit (3) to instruct the unlocking or starting of the object if the application identifier is verified by the control unit (3).
